# EUROPEAN PATENT SPECIFICATION

(11) **EP 2 050 591 B1**
(45) Date of publication and mention of the grant of the patent: **27.01.2010**
(21) Application number: 07425649.6
(22) Date of filing: 15.10.2007
(51) Int. Cl.: B60C 27/10

(54) **Anti-skid device with mounting from the outside**
Gleitschutzvorrichtung zur Montage von außen
Dispositif anti-dérapage avec montage depuis le côté extérieur

(43) Date of publication of application: 22.04.2009
(73) Proprietor: Thule S.p.A., 23847 Molteno (Lecco) (IT)
(72) Inventor: Arrigoni Neri, Marco, 23811 Ballabio (Lecco) (IT); Farina, Luigi, 23843 Dolzago (Lecco) (IT); Necchi, Stefano, 23874 Montevecchia (Lecco) (IT)
(74) Representative: Petruzziello, Aldo

(56) References cited:
- EP-A- 1 466 762
- DE-U1- 20 211 680
- US-A1- 2004 163 747

## Description

The present invention refers to an anti-skid device, commonly known as a snow chain, adapted to be mounted from the side of the wheel facing towards the outside of the vehicle.

Known to the art are snow chains with mounting from the outside, which comprise a central hub from which a plurality of arms or spokes, connected to a terminal element which embraces the tyre tread, protrude radially. The terminal elements of the spokes are connected to portions of chain, which follow the tyre tread. In this manner the portions of chain can scratch or bite into the sleet or the ice on the road surface to exert a greater friction and to avoid slipping or skidding of the tyres.

For tensioning this type of snow chains, an adapter element is provided which is fixed to a wheel bolt or nut. A tensioning strap or chain, which passes through the buckle of a tensioning/locking device consisting of a lever hinged to the hub of the snow chains, is fixed to the adapter element. The user must thus pull the tensioning strap manually in order to tension the snow chains and to adjust the strap coming out of the buckle of the tensioning device to the right length. The user subsequently operates the lever of the tensioning device to lock it on the hub, further tensioning the strap.

Such a type of snow chain presents various drawbacks, due mainly to the fact that a certain force is required to the user to pull the tensioning strap, to adjust the length thereof and to lock the lever on the hub. In fact, with such a system it is generally not possible to obtain an adequate tensioning of the snow chains: Furthermore, it is often necessary to re-tension the strap after a few turns of the wheel.

Another drawback is represented by the adapter device. In fact the user must normally use a special key to fix the adapter by screwing to the bolt. In some cases a lever fixed to the adapter is provided to allow screwing thereof and said lever remains on the wheel during the travel, so that a force acting in the opposite direction to that of screwing of the adapter device would tend to cause a loosening thereof.

Yet another drawback is represented by the portions of chain connected to the terminal elements of the spokes. In fact said portions of chain form a substantially rigid ring on the tyre tread, which cannot be adapted to tyres of different sizes. Furthermore, said ring of portions of chain proves unsuitable when the thickness of the tyre is reduced, due to the wear.

DE 202 11 68 discloses a chain arrangement attached to a wheel comprising curved holding elements pointing towards the center of the wheel and provided with insertion openings at their inner ends and a strong flexible strap guided through the openings to a buckle positioned in the center of the wheel in order to be tightened. This document disclose the features of the preamble of claim 1.

US 2004/163747 discloses a nonskid device for the wheels of vehicles comprising a holding element situated in the region of the wheel axis and used with elastic holding arms holding a chain mesh and tension cable connected to a pivotable tension lever to introduce tension forces into the holding arms.

EP 1 466 762 discloses a snow chain comprising a ring on the inside of the tyre, a series of lozenge-shaped chain sections that go over its tread, and an inner ring of chain or similar with a fastening on the outside of the tyre. The fastening is in the form of a housing on one end of the ring, containing a roller for tensioning a strap attached by a hook to the other end.

Object of the present invention is to overcome at least in part the drawbacks of the prior art by providing a snow chain with mounting from the outside that is practical and simple and quick to mount.

Another object is to provide such a snow chain that is reliable and safe when the vehicle is travelling.

Another object is to provide such a snow chain that is versatile and adapted to be fitted on different types of tyres.

These objects are achieved in accordance with the invention with the characteristics listed in the appended independent claim 1.

Advantageous embodiments of the invention are apparent from the dependent claims.

According to the invention, the anti-skid device with mounting from the outside comprises:
- a central hub designed to be disposed to coincide with the hub of the wheel on which the anti-skid device is to be mounted,
- a plurality of arms protruding radially from said hub and ending in terminal elements designed to be disposed on the tyre tread,
- portions of chain connected to said terminal elements so as to form a ring on the tyre tread,
- an adapter device adapted to be fixed to a wheel-fixing bolt or nut and carrying a tensioning strap or chain which passes through the hub of the anti-skid device to be tensioned by the user, so as to bring the hub of the anti-skid device close to the hub of the wheel, and
- a tensioning device connected to said hub of the anti-skid device and adapted to be operated by the user to lock said tensioning strap, said tensioning device allowing said strap or chain to be pulled in the tensioning direction and does not allow the slipping of said strap in the loosening direction.

The tensioning devices is a jack-type device comprising a winding shaft on which the other end of the tensioning strap is wound and an operating lever mounted rotatably on said winding shaft and which can be operated manually by the operator to operate said winding shaft in the direction of winding of the tensioning strap.

The advantages of the snow chain according to the invention are obvious. In fact the jack-type tensioning device allows an easy tensioning of the strap with a high tensioning force and without any effort on the user's part. Furthermore, such a jack-type tensioning device ensures a high degree of safety of the snow chain, since the tensioning strap cannot slip in the loosening direction.

Further characteristics of the invention will be made clearer by the detailed description that follows, referring to a purely exemplifying and therefore non limiting embodiment thereof, illustrated in the appended drawings, in which:
Figures 1 to 4 are diagrammatic perspective views, showing respectively four steps of the mounting of the snow chains according to the invention;
Figures 5 to 7 are diagrammatic perspective views, illustrating respectively three steps of the removal of the snow chains according to the invention;
Figure 8 is a plan view of a tensioning device for the snow chains according to the invention;
Figure 9 is a sectional view taken along the plane of section IX-IX of Figure 8;
Figure 10 is a side view of three elements of the tensioning device of Figure 8;
Figure 11 is a top plan view of an adjustment device disposed between two portions of chain of the snow chains according to the invention;
Figures 12 and 13 are two perspective views, illustrating an adapter device for the snow chains according to the invention, exploded and assembled, respectively.

The snow chain according to the invention, designated as a whole by the reference numeral 1, is described with the aid of the Figures.

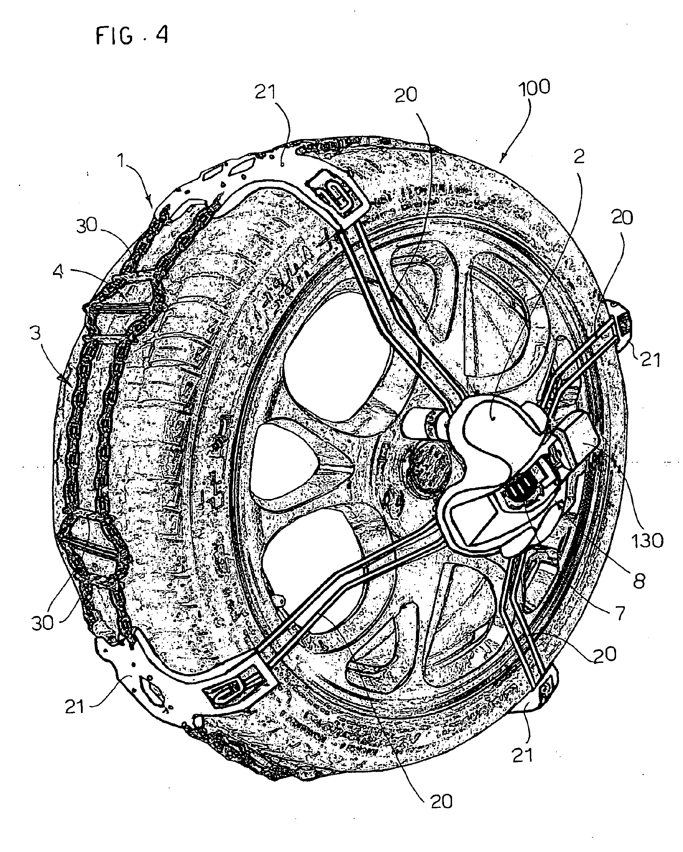

With reference for now to Figure 4, the anti-skid device 1 mounted on a wheel 100 is illustrated. The anti-skid device 1 comprises a hub 2 designed to be disposed to coincide with the wheel hub 101. Arms or spokes 20 protrude radially from the hub 2 of the anti-skid device. In the Figures four arms 20, each formed by a pair of suitably shaped metal rods, are shown.

The ends of the arms 20 are connected to respective terminal elements 21 bent with a radius of curvature, which follows the edge of the tyre, so that the terminal elements 21 can be disposed on the tyre tread. Portions of chain 3 which are disposed in a ring along the tyre tread are connected to the terminal elements 21. By way of example, two portions of chain 3 disposed substantially parallel to each other are shown in the Figure. At suitable intervals, the portions of chain 3 are connected to each other and held in position by transverse plates 30 which are disposed edgeways on the tyre tread, so as to improve the friction with the road surface by biting into the ice or into the snow.

An adjustment device 4 is disposed between a pair of transverse plates 30 to adapt the portions of chain 3 to slightly different wheel diameters or even to compensate for the wear on the tyre, which leads to a reduction in the diameter of the wheel.

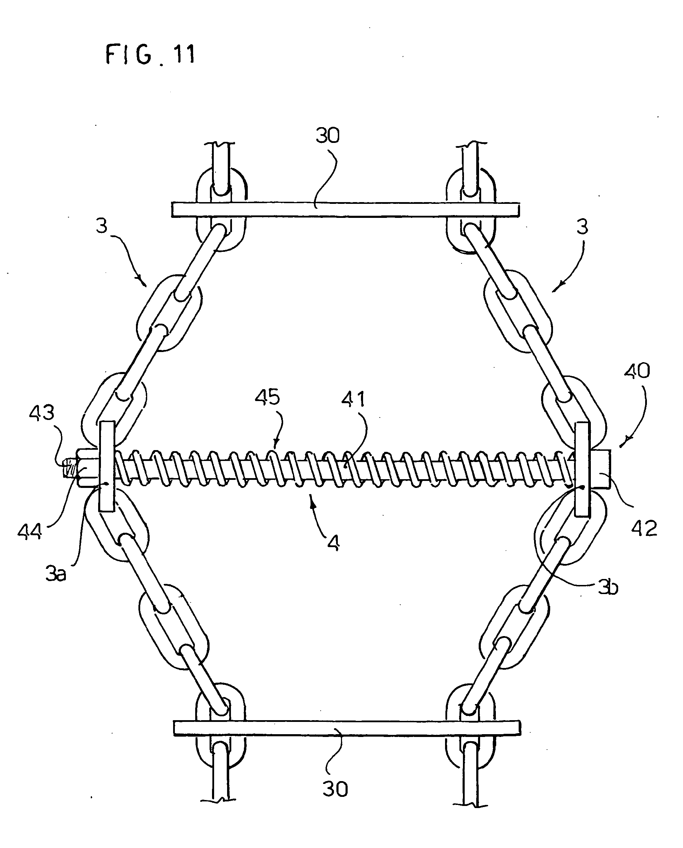

As shown better in Figure 11, the adjustment device 4 comprises a screw 40 having a shank 41 with a smaller diameter than the loop in the links of the portions of chain 3 so as to be able to be inserted therein. The shank 41 is slightly longer than the transverse friction plates 30. The head 42 of the screw has a larger diameter than the loop in the links of the chain 3. The end of the screw shank has a thread 43 to receive a nut 44 with a larger diameter than the loop of the links of portions of chain 3. Around the shank 41, which is preferably smooth, is disposed a helical spring 45 which works under compression.

The screw shank 41 is inserted into two links 3a and 3b of the portions of chain 3 and the nut 44 is screwed onto the threaded end 43 of the screw. Consequently, the ends of the spring 45 push the links 3a and 3b into abutment against the nut 44 and the head 42 of the screw, obtaining the greatest distancing between the links 3a and 3b of the two portions of chain 3. As a result, the diameter of the rings formed by the portions of chain 3 tends to shorten, always keeping the portions of chain 3 tensioned on the tyre.

When the tyre undergoes a reduction in diameter due to the wear, or the anti-skid device 1 is mounted on a tyre with a slightly smaller diameter, an adjustment is made by unscrewing the nut 44 on the threaded portion 43 of the screw 40, so as to bring the portions of chain 3a and 3b further apart through the action of the spring 45. In addition or as an alternative to this adjustment, another adjustment device 4, or a plurality of adjustment devices 4 suitably spaced apart from each other, can be inserted in the portions of chain 3.

Similarly, when the anti-skid device 1 is mounted on a tyre with a slightly larger diameter, an adjustment is made by screwing the nut 44 onto the threaded part 43 of the screw 40, so as to bring the portions of chain 3a and 3b together against the action of the spring 45. In addition or as an alternative to said adjustment, one or more adjustment devices 4 can be eliminated from the portions of chain 3.

It is evident that the operations of insertion, of removal and of adjustment of the adjustment devices 4 are extremely simple and rapid.

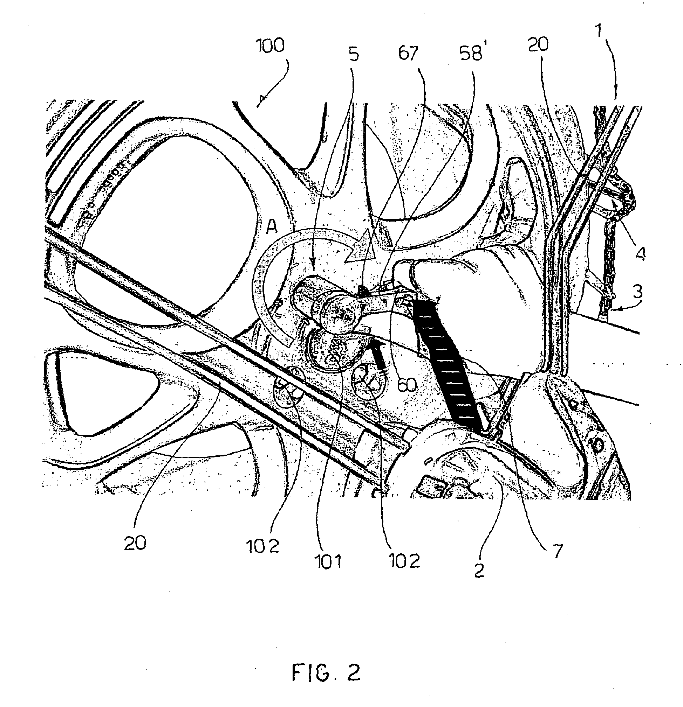

With reference to Figure 2, the anti-skid device 1 comprises an adapter device 5 adapted to be fixed to a bolt or nut 102 fixing the wheel 100.

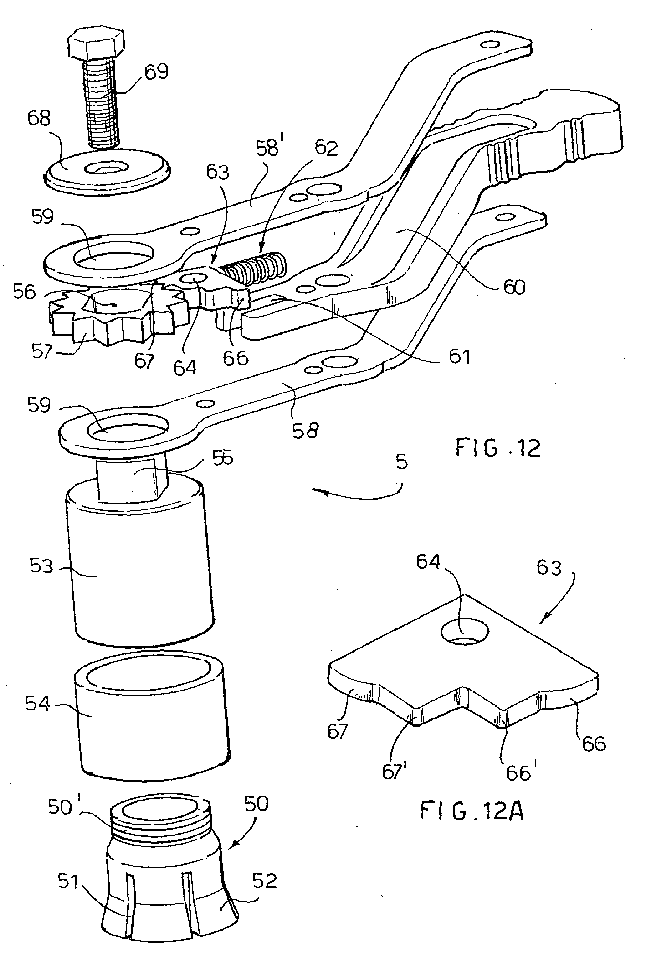

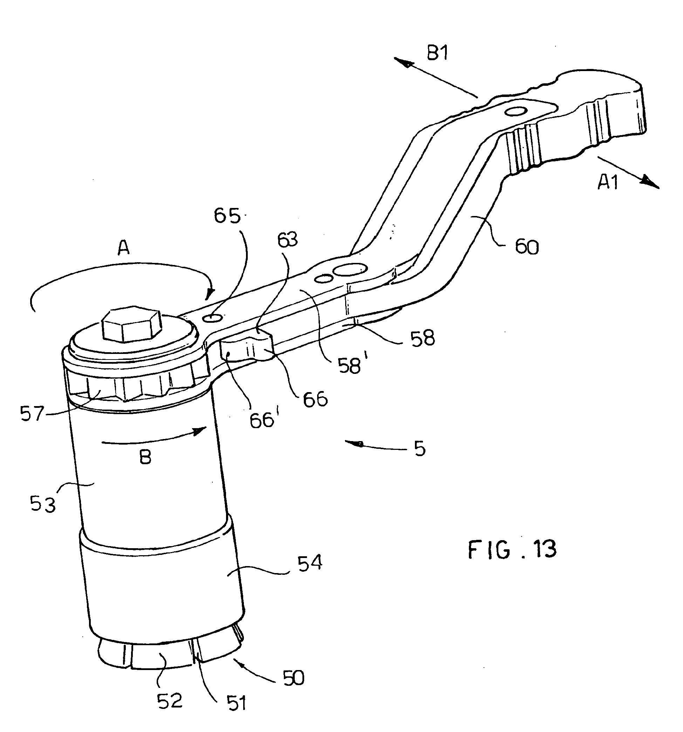

As shown better in Figures 12 and 13, the adapter device 5 comprises a truncated conical head 50 having a seat adapted to receive the head of a wheel-fixing bolt or nut 102 (Figure 2). A plurality of longitudinal slots 51 are formed in the truncated conical head 50 so as to define a plurality of tongues 52 adapted to bend elastically.

The head 50 has a threaded part 50' which screws into a cylindrical tang 53, so as to be able to slide axially with respect thereto. A cylindrical operating element 54 whose bottom edge abuts against the tapered tongues 52 of the head 50 is mounted on the head 50. A square or polygonal pin 55 which engages in a square or polygonal hole 56 of a sprocket wheel 57 protrudes axially from one end of the tang 53.

The sprocket wheel 57 is disposed between the ends of two levers 58 and 58', in the form of plates, provided with circular holes 59, which do not interfere with the square pin 55. A supporting arm 60, which has at its end a U-shaped seat 61, is disposed between the two levers 58 and 58'. A spring 62, which pushes a pawl 63 towards the teeth of the sprocket wheel 57, is disposed in the seat 61 of the supporting arm.

As shown in Figure 12A, the pawl 63 is substantially triangle-shaped and has a hole 64 to receive a pin 65 (Figure 13), so as to be hinged to the levers 58 and 58'. The pawl 63 has a first end 66 and a second end 67, which can alternately protrude from the levers 58 and 58' so as to be operated by the user. The two ends 66 and 67 of the pawl are shaped with respective cam profiles 66' and 67' which mesh in the teeth of the sprocket wheel 57.

If the user presses the first end 66 of the pawl, the cam profile 66' meshes in the teeth of the sprocket wheel 57 and allows the rotation of the sprocket wheel only in a clockwise screwing direction (arrow A in Figure 13) when the lever assembly (58, 58', 60) is rotated in the screwing direction (arrow Al in Figure 13). In this situation a rotation of the arm 60 in the opposite direction (arrow B1) does not cause any rotation of the sprocket wheel 57.

If, on the other hand, the user presses the second end 67 of the pawl, the cam profile 67' meshes in the teeth of the sprocket wheel 57 and allows the rotation of the sprocket wheel only in the anti-clockwise unscrewing direction (arrow B in Figure 13) when the lever assembly (58, 58', 60) is rotated in the unscrewing direction (arrow B1 in Figure 13). In this situation a rotation of the arm 60 in the opposite direction (arrow A1) does not cause any rotation of the sprocket wheel 57.

That is to say, the pawl 63 integral with the arm 60 acts on the sprocket wheel 57 as a jack, allowing the rotation of the sprocket wheel 57 only in one direction and not in the opposite direction, according to the position in which the pawl is disposed. The adapter device 5 is completed by a washer 68 which is disposed at the end of the lever 58' to be passed through by a screw 69 which engages in an axial threaded hole inside the square pin 55.

The rotation of the square pin 55, obtained by operating the arm 60, causes the screwing of the cylindrical tang 53 onto the head 50 and thus the return of the head 50 into the cylindrical operating device 54. As a result, the tongues 52 bend elastically inwards, biting the wheel bolt firmly. In this manner, the adapter device is fixed firmly to the wheel bolt.

To remove the adapter device 5, the user must press the end 67 of the pawl 63 and operate the arm 60 in the unscrewing direction, so as to cause the head 50 to come out of the cylindrical operating device 54, which no longer pushes on the tapered tongues 52. The tapered tongues 52 thus return elastically to the starting position and the head 50 can be detached from the wheel bolt.

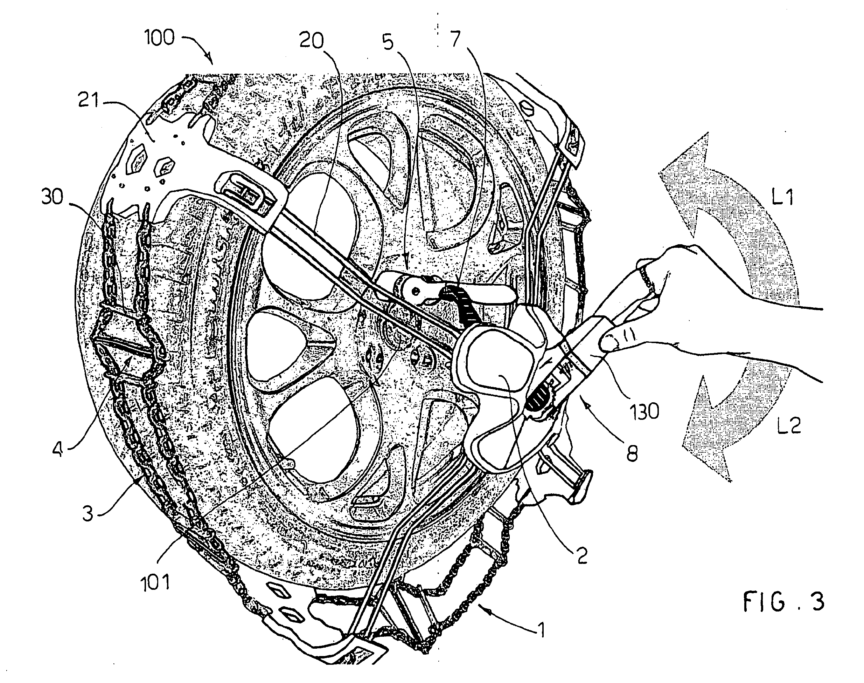

Returning to Figure 2, the end of a tensioning strap or chain 7 is fixed to the lever assembly (58, 58', 60) of the adapter device 5. As shown in Figure 3, the strap 7 is passed through the hub 2 of the snow chains and is connected to a tensioning device 8 constrained to the hub 2.

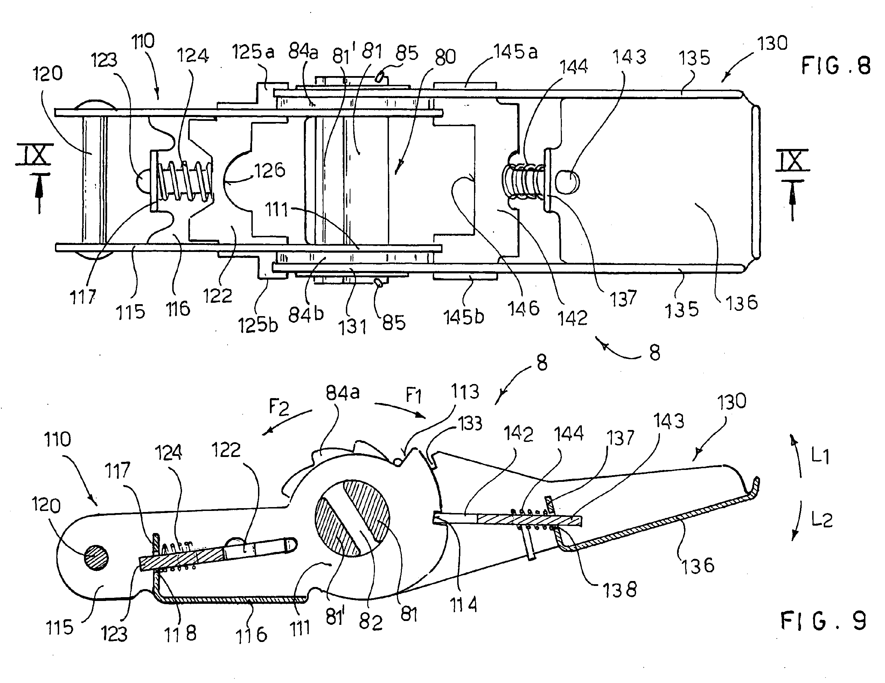

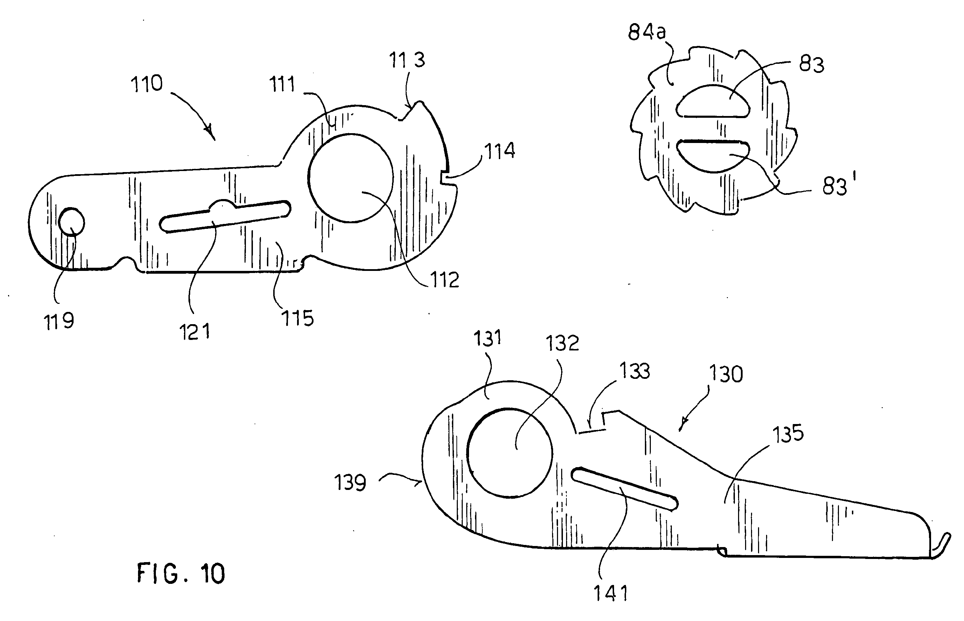

As shown better in Figures 8 to 10, the tensioning device 8 is a jack, which comprises a central winding shaft 80 on which the other end of the strap 7 is wound. The winding shaft 80 is formed by means of two semi-cylindrical elements 81 and 81' spaced apart from each other so as to create a gap 82 into which the end of the strap 7 can be inserted.

The two semi-cylindrical elements 81 and 81' are inserted in respective semi-cylindrical holes 83 and 83' of two sprocket wheels 84a and 84b. The sprocket wheels 84a and 84b are disposed between pairs of circular flanges 111 and 131 of a supporting element 110 and of an operating lever 130, respectively. The two flanges 111 of the supporting element are on the inside, whereas the two flanges 131 of the operating lever are towards the outside.

The flanges 111 and 131 have respective circular holes 112 and 132 through which pass the ends of the semi-cylindrical elements 81 and 81' of the shaft 80, which are constrained to each other by means of respective keys 85. The supporting element 110 is constrained to the hub 2 of the snow chains. The shaft 80 is supported rotatably by the flanges 111 of the supporting element. The flanges 131 of the operating lever are mounted rotatably on the shaft 80, so that the operating lever can be operated by the user.

The flanges 111 of the supporting element have on their profile an abutment surface 113 and a notch 114. The flanges 111 continue with respective side arms 115 in the form of plates, which are connected to each other by a base plate 116. The base plate 116 has centrally an end portion 117, which protrudes at right angles therefrom. A through hole 118 is formed in the end portion 117.

Respective holes 119 to receive a pin 120 on which the strap 7 can run are formed near the end of the arms 115. Respective slots 121 to receive a slide 122 are formed in the central part of the arms 115. The slide 122 has a central pin 123, which is inserted in the hole 118 of the end part 117 of the plate base plate 116. Around the pin 123 is wound a helical spring 124 which pushes the slide 122 towards the shaft 80.

The slide 122 has two teeth 125a and 125b, which protrude laterally into the slots 121 to mesh with the teeth of the respective sprocket wheels 84a and 84b. The teeth of the sprocket wheels 84a and 84b are of such a shape as to allow the rotation of the sprocket wheels 84a and 84b only in the direction of the arrow F1 (Figure 9) and not in the opposite direction of the arrow F2.

The slide 122 has a shaped surface 126 adapted to receive the user's finger to push the slide 122 against the action of the spring 124, so that the teeth 125a and 125b of the slide do not mesh with the teeth of the sprocket wheels 84a and 84b.

The flanges 131 of the operating lever have on their profile a stop seat 133 and a cam surface 139. The flanges 131 continue with respective side arms 135 in the form of plates, which are connected to each other by a base plate 136. The base plate 136 has centrally an end portion 137, which protrudes at right angles therefrom. A through hole 138 is formed in the end portion 137.

Respective slots 141 to receive a slide 142 are formed in the central part of the arms 135. The slide 142 has a central pin 143, which is inserted into the hole 138 in the end part 137 of the base plate 136. A helical spring 144, which pushes the slide 142 towards the shaft 80, is wound around the pin 143.

The slide 142 has two teeth 145a and 145b, which protrude laterally into the slots 141 to mesh with the teeth of the respective sprocket wheels 84a and 84b. The teeth of the sprocket wheels 84a and 84b have such a shape as to allow the operating lever 130 to be able to rotate in the direction of the arrow L1 (Figure 9) without pulling the sprocket wheels 84a and 84b into rotation. On the other hand, when the operating lever 130 rotates in the direction of the arrow L2 (Figure 9), it pulls the sprocket wheels 84a and 84b into rotation in the direction of the arrow F1.

When the tensioning device 8 is open (Figure 9), the operating lever 130 is at about 150° from the supporting elements 110 and the teeth 145a and 145b of the slide 142 are in abutment on the abutment surface 113 of the flanges 111 of the supporting element. On the other hand, when the tensioning device 8 is closed (Figure 4) the operating lever 130 is situated on the supporting elements 110 and the teeth 125a and 125b of the slide 122 are in abutment in the stop seat 133 of the flanges 131 of the operating lever.

Returning to Figure 8, the slide 142 has a shaped surface 146 adapted to receive the user's finger to push the slide 142 against the action of the spring 144, so that the teeth 145a and 145b of the slide disengage from the teeth of the sprocket wheels 84a and 84b and from the abutment surface 113 of the flanges 111 of the supporting element. In this manner, the operating lever 130 can be rotated further, until the teeth 145a and 145b of the slide 142 mesh with the notches 144 of the flanges 111 of the supporting element, when the operating lever 130 is at about 180° from the supporting element 110.

In this situation (not shown in the Figures), the tensioning device 8 is completely open and the cam surface 139 of the flanges 131 of the operating lever pushes on the teeth 125a and 125b of the slide 122, against the action of the spring 124, disengaging the teeth 125a and 125b from the sprocket wheels 84a and 84b. In this manner the sprocket wheels 84a and 84b are free to rotate in both directions of the arrows F1 and F2.

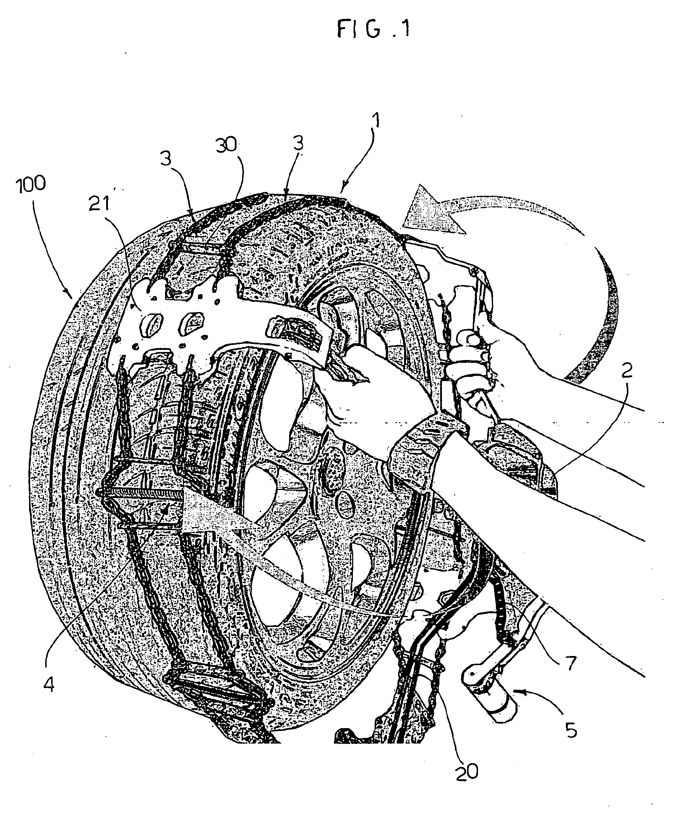

The mounting of the anti-skid device 1 according to the invention is described hereunder with reference to Figures 1 to 4.

With reference to Figure 1, the operator grips two spokes 20 of the anti-skid device 1 to mount them from the outside of the wheel, arranging the ring formed by the portions of chain 3 on the tyre tread.

As shown in Figure 2, the operator subsequently grips the operating lever assembly (58, 58', 60) of the adapter device 4, arranges the head of the adapter device on a bolt 102 of the tyre, presses the end 66 of the pawl 63 (Figure 13) with a thumb and operates the operating lever (58, 58', 60) so as to cause the rotation of the sprocket wheel 57 in the direction of the arrow A and thus the tightening of the wheel bolt.

Subsequently, as shown in Figure 3, the operator grips the operating lever 130 of the tensioning device 8 and alternately operates said lever in the direction of the arrows L1 and L2, causing the rotation of the sprocket wheels 84a and 84b in the direction of the arrow F1 (Figure 9) and thus the rotation of the winding shaft 80 in the direction of winding of the strap 7. As a result, the strap 7 winds around the shaft 80, pulling the hub 2 of the snow chains towards the hub 101 of the wheel and thus tensioning the terminal elements 21 of the arms 20 on the tyre, as shown in Figure 4.

It should be noted that thanks to the tensioning device 8, of the jack type, the tensioning of these snow chains proves easy and the chains can be tensioned adequately. At the end of the tensioning, the operating lever 130 is disposed in its closed position. In this situation, the sprocket wheels 84a and 84b can rotate only in the direction of tensioning and not in the opposite direction of loosening of the strap 7.

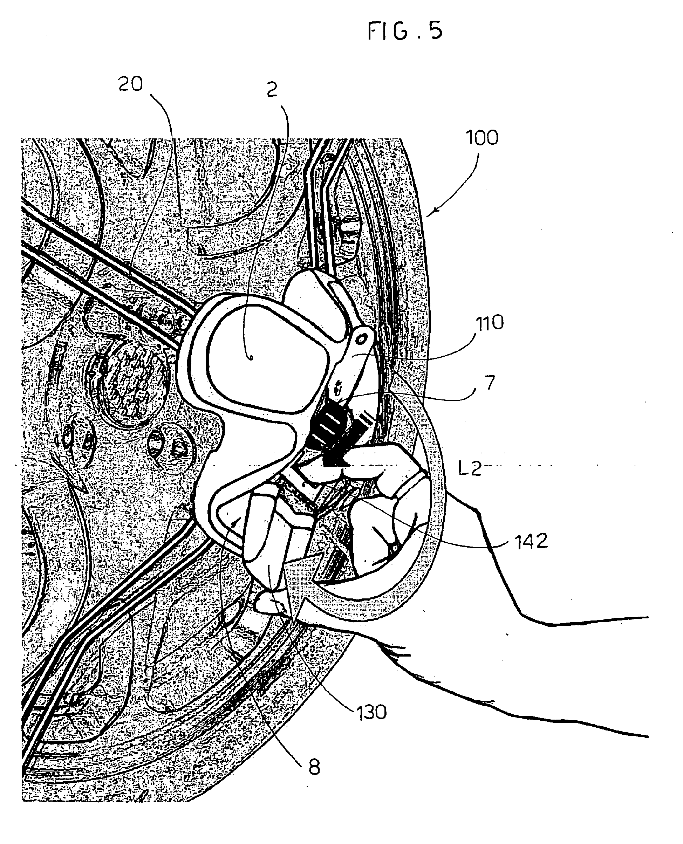

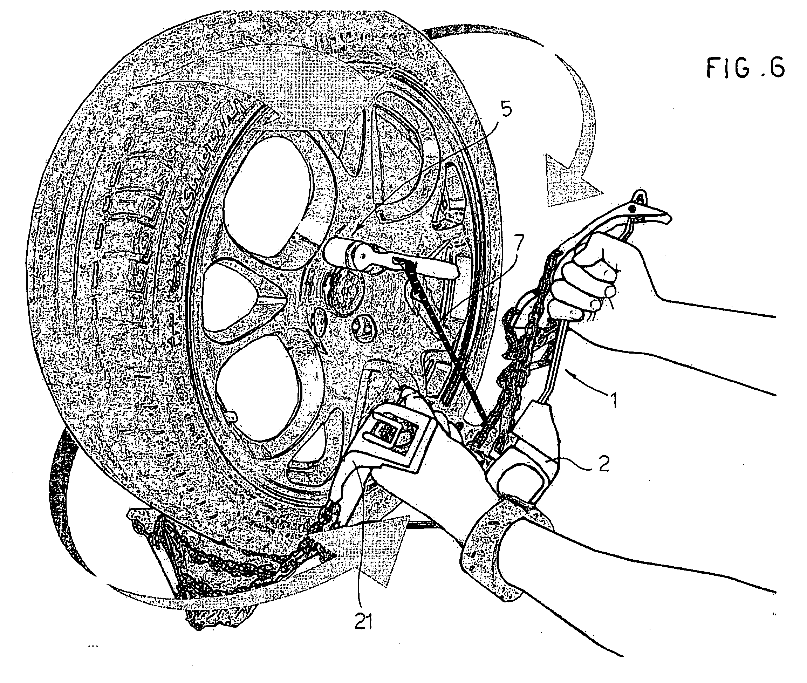

The removal of the anti-skid device 1 is described hereunder with reference to Figures 5 and 6.

As shown in Figure 5, the user turns the operating lever 130 so as to open the tensioning device 8. Then, with his fingers he pulls back the slide 142 against the action of the spring 144 (Figure 8), so as to disengage the teeth 145a and 145b of the slide 142 from the sprocket wheels 84a and 84b and from the abutment seat 113 of the supporting element. He then continues to turn the operating lever 130 so that the teeth 145a and 145b of the slide 142 mesh with the notches 114 of the flanges 111 of the supporting element. In this situation, the cam 139 of the flanges 131 of the operating lever pushes the teeth 125a and 125b of the slide 122, so as to disengage them from the teeth of the sprocket wheels 84a and 84b.

As a result, the sprocket wheels 84a and 84b are free and the shaft 80 can rotate in the unwinding direction of the strap 7, allowing the anti-skid device 1 to loosen and thus the hub 2 of the anti-skid device 1 to be moved away from the wheel, as shown in Figure 6.

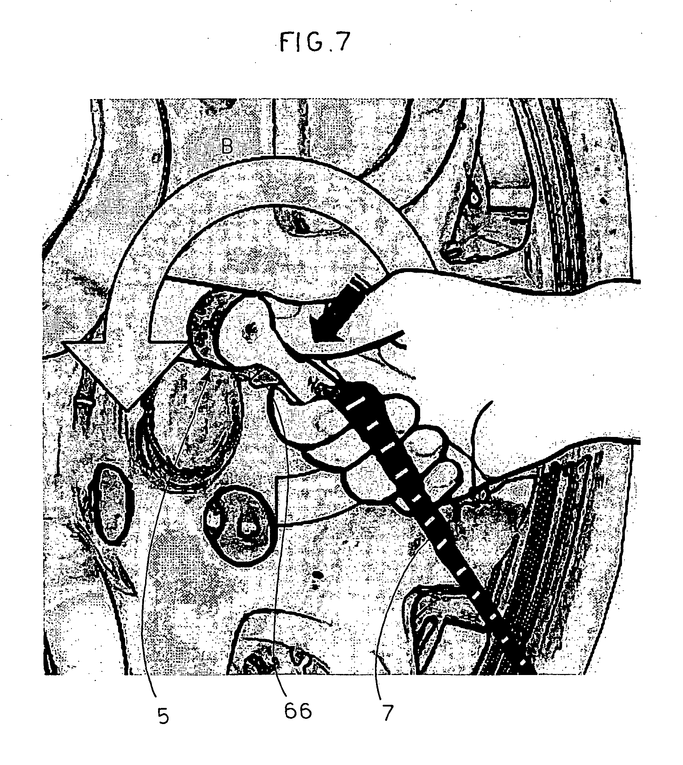

Lastly, as shown in the Figure 7, the operator grips the operating lever assembly (58, 58', 60) of the adapter device 5, presses the end 67 of the pawl 63 (Figure 13) with a thumb and operates the operating lever assembly (58, 58', 60) so as to cause the rotation of the sprocket wheel 57 in the direction of the arrow B and thus the loosening of the head 50 of the adapter device on the wheel bolt, so as to be able to remove the adapter device 5.

Numerous changes and modifications of detail within the reach of a person skilled in the art can be made to the present embodiment of the invention without thereby departing from the scope of the invention as set forth in the appended claims.

## Claims

1. An anti-skid device (1) with mounting from the outside, comprising:
- a central hub (2) designed to be disposed to coincide with the hub (101) of the wheel on which the anti-skid device (1) is to be mounted,
- a plurality of arms (20) protruding radially from said hub (2) and ending in terminal elements (21) designed to be disposed on the tyre tread,
- portions of chain (3) connected to said terminal elements (21) so as to form a ring on the tyre tread,
- an adapter device (5) adapted to be fixed to a wheel-fixing bolt or nut (102), to which is secured one end of a tensioning strap or chain (7) which passes through the hub (2) of the anti-skid device to be tensioned by the user, so as to bring the hub (2) of the anti-skid device (1) close to the wheel hub (101), and
- a tensioning device (8) connected to said hub (2) of the anti-skid device (1) and adapted to be operated by the user to lock said tensioning strap (7), said tensioning device (8) allowing said strap or chain (7) to be pulled in the tensioning direction and does not allow the slipping of said strap (7) in the loosening direction
**characterised in that**
said tensioning device (8) is a jack-type tensioning device comprising a winding shaft (80) on which the other end of the tensioning strap (7) is wound and an operating lever (130) mounted rotatably on said winding shaft (80) and which can be operated manually by the operator to operate said winding shaft (80) in the direction of winding of the tensioning strap (7).

2. An anti-skid device (1) according to claim 1, **characterised in that** said tensioning device (8) further comprises:
- a supporting element (110) integral with said hub (2) of the anti-skid device (1) and rotatably supporting said winding shaft,
- two sprocket wheels (84a, 84b) keyed onto the ends of the winding shaft (80), said operating lever (130) acting on said sprocket wheels (84a, 84b) to rotate said winding shaft (80).

3. An anti-skid device (1) according to claim 2, **characterised in that** said supporting element (110) comprises a slide (122) provided with two teeth (125a, 125b) that mesh with said sprocket wheels (84a, 84b) through the thrust of a spring (124).

4. An anti-skid device (1) according to claim 2 or 3, **characterised in that** said operating lever (130) comprises a slide (142) provided with two teeth (145a, 145b) which mesh with said sprocket wheels (84a, 84b), through the thrust of a spring (144).

5. An anti-skid device (1) according to claim 4, **characterised in that** said supporting element (110) comprises two flanges (111) which rotatably support said shaft (80), the profile of said flanges (111) having an abutment surface (113) and a notch (114) to receive said teeth (145a, 145b) of the slide (142) of the operating lever (130) in an open position and in a completely open position of the operating lever (130).

6. An anti-skid device (1) according to any one of claims 3 to 5, **characterised in that** said operating lever (130) comprises two flanges (131) mounted rotatably on said shaft (80), the profile of said flanges (131) having a stop seat (133) to receive said teeth (125a, 125b) of the slide of the supporting device in a closed position of the operating lever (130) and a cam profile (139) to push said teeth (125a, 125b) of the slide (125) of the supporting device into a position of non engagement with the sprocket wheels (85a, 85b).

7. An anti-skid device (1) according to any one of the preceding claims, **characterised in that** said adapter device (5) is a jack-type device.

8. An anti-skid device (1) according to claim 7, **characterised in that** said adapter device (5) comprises:
- a head (50) provided with tongues (52) which clamp on a wheel-fixing bolt or nut (102),
- an operating cylinder (54), which causes the tightening or the loosening of said tongues (52) on the wheel-fixing bolt or nut (102),
- a sprocket wheel (57), which can be operated by a jack-type lever (60) to cause a relative axial sliding between said head (50) and said operating cylinder (54),
- a pawl (63), which meshes with the teeth of said sprocket wheel (57), to allow the rotation thereof, by means of a manual operation of a lever assembly (58, 58', 60) integral with said pawl (63).

9. An anti-skid device (1) according to claim 8, **characterised in that** said pawl (63) is hinged to said lever assembly (58, 58') to pass from a first position, in which it allows the rotation of said sprocket wheel (57) only in the clamping direction of the tongues (52) of the head (50) on the wheel-fixing bolt (102), to a second position in which it allows the rotation of said sprocket wheel (57) only in the loosening direction of the tongues (52) of the head (50) on the wheel-fixing bolt (102).

10. An anti-skid device (1) according to any one of the preceding claims, **characterised in that** it comprises an adjustment device (4) able to adapt the portions of chain (3) to slightly different wheel diameters or even to compensate for the wear on the tyre which leads to a reduction in diameter of the wheel, said adjustment device (4) comprising a screw (40) provided with a shank (41) inserted in the loops of two links (3a, 3b) of two portions of chain (3) and a spring (45) disposed around said shank (41) so as to move said links of chain (3a, 3b) apart from each other, said screw (40) having a threaded end (43) on which an adjustment nut (44) engages.

## Patentansprüche

1. Von außen anzubringende Antirutschvorrichtung (1), die Folgendes umfasst:
- eine mittige angeordnete Nabe (2), die dafür ausgelegt ist, auf der gleichen geometrischen Achse wie die Nabe (101) des Rades, an dem die Antirutschvorrichtung (1) zu montieren ist, angeordnet zu werden,
- mehrere Arme (20), die radial von der Nabe (2) abstehen und in Abschlusselementen (21) enden, die dafür ausgelegt sind, auf dem Reifenprofil angeordnet zu werden,
- Kettensegmente (3), die so mit den Abschlusselementen (21) verbunden sind, dass ein um das Reifenprofil herum führender Ring gebildet wird,
- eine Adaptervorrichtung (5), die dafür geeignet ist, an einer Radschraube oder - mutter (102) angebracht zu werden, und an der ein Ende eines Spannbandes oder einer Spannkette (7) befestigt ist, das bzw. die durch die Nabe (2) der Antirutschvorrichtung hindurch verläuft, um durch den Benutzer gespannt zu werden, so dass die Nabe (2) der Antirutschvorrichtung (1) nahe an die Radnabe (101) herangeführt wird, und
- eine Spannvorrichtung (8), die mit der Nabe (2) der Antirutschvorrichtung (1) verbunden ist und dafür ausgelegt ist, durch den Benutzer betätigt zu werden, um das Spannband (7) zu verriegeln, wobei die Spannvorrichtung (8) ein Ziehen des Bandes oder der Kette (7) in die Spannrichtung erlaubt und ein Rutschen des Bandes (7) in der Löserichtung verhindert,
**dadurch gekennzeichnet, dass**
die Spannvorrichtung (8) eine Spannvorrichtung vom Ratschentyp ist, die eine Wickelwelle (80), auf die das andere Ende des Spannbandes (7) gewickelt wird, und einen Betätigungshebel (130) umfasst, der drehbar an der Wickelwelle (80) montiert ist und der von Hand durch den Bediener betätigt werden kann, um die Wickelwelle (80) in der Richtung des Aufwickelns des Spannbandes (7) zu betätigen.

2. Antirutschvorrichtung (1) nach Anspruch 1, **dadurch gekennzeichnet, dass** die Spannvorrichtung (8) des Weiteren Folgendes umfasst:
- ein Stützelement (110), das integral mit der Nabe (2) der Antirutschvorrichtung (1) ausgebildet ist und die Wickelwelle drehbar stützt,
- zwei Zahnscheiben (84a, 84b), die formschlüssig auf den Enden der Wickelwelle (80) sitzen, wobei der Betätigungshebel (130) auf die Zahnscheiben (84a, 84b) wirkt, um die Wickelwelle (80) zu drehen.

3. Antirutschvorrichtung (1) nach Anspruch 2, **dadurch gekennzeichnet, dass** das Stützelement (110) ein Schiebestück (122) umfasst, das mit zwei Zähnen (125a, 125b) versehen ist, die unter der Schubwirkung einer Feder (124) in die Zahnscheiben (84a, 84b) eingreifen.

4. Antirutschvorrichtung (1) nach Anspruch 2 oder 3, **dadurch gekennzeichnet, dass** der Betätigungshebel (130) ein Schiebestück (142) umfasst, das mit zwei Zähnen (145a, 145b) versehen ist, die unter der Schubwirkung einer Feder (144) in die Zahnscheiben (84a, 84b) eingreifen.

5. Antirutschvorrichtung (1) nach Anspruch 4, **dadurch gekennzeichnet, dass** das Stützelement (110) zwei Flansche (111) umfasst, in denen die Welle (80) drehbar gelagert ist, wobei das Profil der Flansche (111) eine Anschlagfläche (113) und eine Aussparung (114) zur Aufnahme der Zähne (145a, 145b) des Schiebestücks (142) des Betätigungshebels (130) in einer geöffneten Stellung und in einer vollständig geöffneten Stellung des Betätigungshebel (130) aufweist.

6. Antirutschvorrichtung (1) nach einem der Ansprüche 3 bis 5, **dadurch gekennzeichnet, dass** der Betätigungshebel (130) zwei Flansche (131) umfasst, die drehbar an der Welle (80) montiert sind, wobei das Profil der Flansche (131) einen Endanschlagsitz (133) zur Aufnahme der Zähne (125a, 125b) des Schiebestücks der Stützvorrichtung in einer geschlossenen Stellung des Betätigungshebels (130) sowie ein Nockenprofil (139) zum Schieben der Zähne (125a, 125b) des Schiebestücks (125) der Stützvorrichtung in eine Position des Nichteingriffs mit den Zahnscheiben (85a, 85b) aufweist.

7. Antirutschvorrichtung (1) nach einem der vorangehenden Ansprüche, **dadurch gekennzeichnet, dass** die Adaptervorrichtung (5) vom Ratschentyp ist.

8. Antirutschvorrichtung (1) nach Anspruch 7, **dadurch gekennzeichnet, dass** die Adaptervorrichtung (5) Folgendes umfasst:
- einen Kopf (50), der mit Zungen (52) versehen ist, die eine Radschraube oder - mutter (102) in Klemmeingriff nehmen,
- einen Arbeitszylinder (54), der das Klammem oder das Lösen der Zungen (52) an der Radschraube oder -mutter (102) bewirkt,
- ein Ritzel (57), das durch einen Ratschenhebel (60) betätigt werden kann, um eine relative axiale Verschiebung zwischen dem Kopf (50) und dem Arbeitszylinder (54) zu bewirken,
- eine Sperrklinke (63), die in die Zähne des Ritzels (57) eingreift, um eine Drehung des Ritzels (57) durch eine manuelle Betätigung einer Hebelbaugruppe (58, 58', 60), die integral mit der Sperrklinke (63) ausgebildet ist, zu ermöglichen.

9. Antirutschvorrichtung (1) nach Anspruch 8, **dadurch gekennzeichnet, dass** die Sperrklinke (63) so an der Hebelbaugruppe (58, 58') angelenkt ist, dass sie sich aus einer ersten Stellung, in der sie das Drehen des Ritzels (57) nur in der Klemmrichtung der Zungen (52) des Kopfes (50) an der Radbefestigungsschraube (102) erlaubt, in eine zweite Stellung, in der sie das Drehen des Ritzels (57) nur in der Löserichtung der Zungen (52) des Kopfes (50) an der Radbefestigungsschraube (102) erlaubt, bewegen kann.

10. Antirutschvorrichtung (1) nach einem der vorangehenden Ansprüche, **dadurch gekennzeichnet, dass** sie eine Verstellvorrichtung (4) umfasst, die ein Anpassen der Kettensegmente (3) an geringfügig unterschiedliche Raddurchmesser oder auch ein Kompensieren des Reifenverschleißes, der zu einer Verringerung des Raddurchmessers führt, ermöglicht, wobei die Verstellvorrichtung (4) eine Schraube (40) umfasst, die mit einem Schaft (41) versehen ist, der in die Ringe zweier Verbindungsglieder (3a, 3b) zweier Kettensegmente (3) eingeschoben wird, und eine Feder (45) umfasst, die um den Schaft (41) herum angeordnet ist, um die Kettenverbindungsglieder (3a, 3b) auseinander zu spreizen, wobei die Schraube (40) ein Gewinde-Ende (43) aufweist, auf das eine Verstellmutter (44) aufgeschraubt ist.

## Revendications

1. Dispositif anti-dérapage (1) avec montage depuis le côté extérieur comprenant :
- un moyeu central (2) conçu pour être disposé de manière à coïncider avec le moyeu (101) de la roue sur laquelle le dispositif anti-dérapage (1) doit être monté,
- une pluralité de bras (20) faisant saillie radialement dudit moyeu (2) et se terminant dans des éléments terminaux (21) conçus pour être disposés sur la bande de roulement,
- des parties de chaîne (3) reliées auxdits éléments terminaux (21) de façon à former un anneau sur la bande de roulement,
- un dispositif adaptateur (5) adapté pour être fixé sur un boulon ou un écrou de fixation de roue (102) sur lequel une extrémité d'une courroie ou chaîne de tension (7) est fixée qui passe à travers la moyeu (2) du dispositif anti-dérapage pour être tendue par l'utilisateur, de manière à amener la moyeu (2) du dispositif anti-dérapage (1) près du moyeu de roue (101), et
- un dispositif tendeur (8) relié audit moyeu (2) du dispositif anti-dérapage (1) et adapté pour être actionné par l'utilisateur pour verrouiller ladite courroie de tension (7), ledit dispositif tendeur (8) permettant à ladite courroie ou chaîne (7) d'être tirée dans la direction de tension et ne permet pas à ladite courroie (7) de glisser dans la direction de séparation,
**caractérisé en ce que**
ledit dispositif tendeur (8) est un dispositif tendeur de type cric comprenant un arbre d'enroulement (80) sur lequel l'autre extrémité de la courroie de tension (7) est enroulée et un levier d'actionnement (130) monté de manière rotative sur ledit arbre d'enroulement (80) et qui peut être actionné manuellement par l'opérateur pour faire fonctionner ledit arbre d'enroulement (80) dans la direction d'enroulement de la courroie de tension (7).

2. Dispositif anti-dérapage (1) selon la revendication 1, **caractérisé en ce que** ledit dispositif tendeur (8) comprend en outre :
- un élément de support (110) formant monobloc avec ledit moyeu (2) du dispositif anti-dérapage (1) et soutenant ledit arbre d'enroulement de manière rotative,
- deux roues dentées (84a, 84b) clavetées sur les extrémités de l'arbre d'enroulement (80), ledit levier d'actionnement (130) agissant sur lesdites roues dentées (84a, 84b) pour faire tourner ledit arbre d'enroulement (80).

3. Dispositif anti-dérapage (1) selon la revendication 2, **caractérisé en ce que** ledit élément de support (110) comprend une coulisse (122) munie de deux dents (125a, 125b) qui s'engrènent avec lesdites roues dentées (84a, 84b) par la poussée d'un ressort (124).

4. Dispositif anti-dérapage (1) selon la revendication 2 ou 3, **caractérisé en ce que** ledit levier d'actionnement (130) comprend une coulisse (142) munie de deux dents (145a, 145b) qui s'engrènent avec lesdites roues dentées (84a, 84b) par la poussée d'un ressort (144).

5. Dispositif anti-dérapage (1) selon la revendication 4, **caractérisé en ce que** ledit élément de support (110) comprend deux brides (111) qui soutiennent de manière rotative ledit arbre (80), le profilé desdites brides (111) ayant une surface du butée (113) et une encoche (114) pour recevoir lesdites dents (145a, 145b) de la coulisse (142) du levier d'actionnement (130) dans une position ouverte et dans une position complètement ouverte du levier d'actionnement (130).

6. Dispositif anti-dérapage (1) selon l'une quelconque des revendications 3 à 5, **caractérisé en ce que** ledit levier d'actionnement (130) comprend deux brides (131) montées de manière rotative sur ledit arbre (80), le profilé desdites brides (131) ayant un siège d'arrêt (133) pour recevoir lesdites dents (125a, 125b) de la coulisse du dispositif de support dans une position fermée du levier d'actionnement (130) et un profilé de came (139) pour pousser lesdites dents (125a, 125b) de la coulisse (125) du dispositif de support dans une position de non-engagement avec les roues dentées (84a, 84b).

7. Dispositif anti-dérapage (1) selon l'une quelconque des revendications précédentes, **caractérisé en ce que** ledit dispositif d'adaptateur (5) est un dispositif de type cric.

8. Dispositif anti-dérapage (1) selon la revendication 7, **caractérisé en ce que** ledit élément adaptateur (5) comprend :
- une tête (50) munie de languettes (52) qui se pincent sur le boulon ou écrou de fixation de roue (102) ,
- un vérin d'actionnement (54) qui provoque la tension ou la séparation desdites languettes (52) sur le boulon ou écrou de fixation de roue (102),
- une roue dentée (57) qui peut être actionnée par un levier de type cric (60) pour déclencher un glissement axial relatif entre ladite tête (50) et ledit vérin d'actionnement (54),
- un cliquet (63) qui s'engrène avec les dents de ladite roue dentée (57) pour permettre la rotation de celle-ci, au moyen d'un fonctionnement manuel d'un montage de levier (58, 58', 60) formant monobloc avec ledit cliquet (63).

9. Dispositif anti-dérapage (1) selon la revendication 8, **caractérisé en ce que** ledit cliquet (63) est monté avec des charnières sur ledit montage de levier (58, 58') pour passer d'une première position dans laquelle il permet la rotation de ladite roue dentée (57) uniquement dans la direction de pincement des languettes (52) de la tête (50) sur le boulon de fixation de roue (102), à une seconde position dans laquelle il permet la rotation de ladite roue dentée (57) uniquement dans la direction de séparation des languettes (52) de la tête (50) sur le boulon de fixation de roue (102).

10. Dispositif anti-dérapage (1) selon l'une quelconque des revendications précédentes, **caractérisé en ce qu'**il comprend un dispositif de réglage (4) capable d'adapter les parties de chaîne (3) à des diamètres de roue légèrement différents ou même de compenser l'usure du pneu qui entraîne une réduction de diamètre de la roue, ledit dispositif de réglage (4) comprenant une vis (40) munie d'une tige (41) insérée dans les boucles de deux maillons (3a, 3b) de deux parties de chaîne (3) et un ressort (45) placé autour de ladite tige (41) de manière à éloigner lesdits maillons de la chaîne (3a, 3b) l'un de l'autre, ladite vis (40) ayant une extrémité filetée (43) sur lequel un écrou de réglage (44) s'engage.
